# EUROPEAN PATENT APPLICATION

(11) **EP 4 793 084 A1**
(43) Date of publication of application: **19.08.2026**
(21) Application number: 25157593.2
(22) Date of filing: 13.02.2025
(51) Int. Cl.: B60L 3/00, B60L 58/13

(54) **MANAGING AN ENERGY STORAGE SYSTEM BY EVALUATING ACCURACY OF A STATE OF CHARGE OF THE ENERGY STORAGE SYSTEM**

(71) Applicant: Volvo Penta Corporation, 405 08 Göteborg (SE)
(72) Inventor: JARGANS, Ringolds, 462 31 Trollhättan (SE); KERSTEN, Anton, 433 42 Partille (SE)
(74) Representative: Valea AB

(57) **Abstract**

A control device for an energy storage system (ESS) system comprising an ESS and a battery management system (BMS), and a method for controlling the ESS system are provided. The method comprises obtaining an accuracy value indicative of an accuracy of a state of charge (SoC) of the ESS, and, in response to the accuracy value being below a SoC accuracy threshold, a next time the ESS is to be charged or discharged, instructing the ESS to be charged to a full charge level or to be fully discharged, and initiating a SoC calibration of the ESS. The accuracy value may be determined based on one or more SoC parameters comprising an internal resistance, a cell voltage delta, a cell voltage, a rate of change of the cell voltage delta, a charged/discharged capacity in a current cycle, a cycle start Open Circuit Voltage (OCV), a cycle end OCV of the ESS, and an operating time since a last SoC calibration of the ESS.

## Description

### TECHNICAL FIELD

The disclosure relates generally to controlling or managing a system comprising an energy storage system (ESS) of a vehicle or a stationary system by determining an accuracy value indicative of an accuracy of a state of charge (SoC) of the ESS and determining, based on the accuracy value, whether full charging or discharging of the ESS is warranted. It further relates to a control device, a vehicle, a stationary system, a computer program product, and a tangible non-transitory computer-readable medium.

### BACKGROUND

Electric vehicles, such as fuel cell electric vehicles (FCEVs) and battery electric vehicles (BEVs), as well as various stationary systems and devices e.g. a battery energy storage system (BESS), rely on an energy storage system (ESS) as an energy source. The ESS may comprise one or more batteries comprising battery cells. A battery may be, e.g., a lithium-ion (Li-ion) battery, which is considered a good choice for electric vehicles, due to properties such as high specific energy, high energy density and low self-discharge rate in comparison to other battery technologies.

A state of charge (SoC) of the battery is an important parameter for predicting available battery energy. However, the SoC cannot be directly measured because e.g. Li-ion batteries store energy in a chemical form, and this energy cannot be directly accessed. Thus, it may be challenging to measure the SoC of the battery with adequate precision and reliability. Known approaches, such as, e.g., Coulomb counting in combination with open circuit voltage (OCV)-SoC mapping, may introduce inaccuracies. Estimation of the SoC in some battery systems may be challenging due to a "flat" OCV curve in majority of the SoC region, i.e. a voltage of the battery cell may be almost constant over a broad SoC range. Moreover, a full charge or discharge of the ESS may be required for SoC (re)calibration of the ESS, which may however negatively impact a durability and lifespan of the ESS.

Accordingly, there is a need in approaches for controlling systems comprising an ESS based on determining a SoC of the ESS with improved precision and reliability.

### SUMMARY

In an aspect, a control device for an energy storage system (ESS) system comprising an ESS is provided. The control device comprises processing circuitry and a memory device storing computer-executable instructions, the processing circuitry being configured to execute the computer-executable instructions to obtain an accuracy value indicative of an accuracy of a state of charge, SoC, of the ESS; and, in response to the accuracy value being below a SoC accuracy threshold, a next time the ESS is to be charged or discharged, instruct the ESS to be charged to a full charge level or to be fully discharged, and initiate a SoC calibration of the ESS.

In some examples, the control device may be included in an electrical or hybrid vehicle. In some examples, the control device may be included in a stationary system. In some examples, the control device may be included in a battery energy storage system (BESS). The BESS may be or may be part of a stationary system. In some examples, the BESS may be located onboard a marine vessel.

The technical benefits may include determining the SoC of the ESS, such as a battery, with increased precision and reliability. Thus, the ESS and/or a system comprising the ESS, such as e.g. an electric or hybrid vehicle or a BESS, can benefit from a more accurate estimation of the SoC and thus of energy available for use by a consumer. A number of times the ESS is fully charged or fully discharged is decreased, due to determining whether such event is required to calibrate or recalibrate the SoC of the ESS. This improves a pattern of full charge/discharge events for the ESS. Thus, a number of deep or full charge-discharge cycles is decreased. In this way, deterioration of the ESS is reduced, which leads to increasing durability and lifespan of the ESS. As another technical benefit, the availability of the system, e.g., an electric or hybrid vehicle or a BESS, is increased due to the reduction in the number of ESS full charge and/or full discharge events. Also, user experience may be enhanced due to an automatic decision as to whether and when to fully charge or fully discharge the ESS.

In some examples, the processing circuitry may be configured to, in response to the accuracy value being below the SoC accuracy threshold, inform a user about the ESS to be charged to the full charge level the next time the ESS is to be charged, or inform the user about the ESS to be fully discharged the next time the ESS is to be discharged.

The technical benefits may include informing the user about a status of the ESS. The technical benefits may include ensuring that the user does not override the automatically-instructed full charge or discharge event and the full charge or full discharge process is thus performed as instructed. In some cases, a user, such as e.g. a driver of a vehicle comprising the ESS, may not be aware of the upcoming and/or ongoing full charge or fully discharge event, and may interrupt such a process. Thus, informing the user about the ESS to be charged to the full charge level or to be fully discharged, and in some cases during the process of fully charging or discharging the ESS, improves the reliability of the process and thus helps to ensure that the SoC value is determined with improved precision while allowing to reduce a number of full charge/discharge events.

In some examples, the processing circuitry may be configured to, after the ESS has been charged to the full charge level or fully discharged and the SoC of the ESS has been calibrated, set the accuracy value to a maximum accuracy value.

The technical benefits may include the improved way of keeping track of the accuracy of the SoC of the ESS.

In some examples, the processing circuitry may be configured to, in response to the accuracy value being above the SoC accuracy threshold, generate an indication that is different from instructing the ESS to be charged to a full charge level or to be fully discharged.

The technical benefits may include reducing a number of times when the ESS is fully charged or fully discharged. In some examples, the indication, also referred to herein as a second indication that is different from an indication instructing the ESS to be fully charged or to be fully discharged, may be generated to proactively inform the system and/or a user of the system, that the full charge or full discharge of the ESS is not to be performed. In some examples, the second indication may comprise an indication permitting a user of the system comprising the ESS to set a specified charge level for the ESS. This advantageously improves a manner in which the ESS is controlled.

In some examples, the accuracy value indicative of the accuracy of the SoC may be determined based on one or more SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start open circuit voltage (OCV) of the ESS, a cycle end OCV of the ESS, and an operating time since a last SoC calibration of the ESS.

In some examples, the one or more SoC parameters may be associated with respective weight coefficients for determining the accuracy value indicative of the accuracy of the SoC.

The technical benefits may include using the parameters indicative of a state of the ESS and the SoC of the ESS, to determine or estimate the accuracy value indicative of the accuracy of the SoC in an improved manner. The SoC parameters may be combined, e.g. in accordance with respective weight coefficients wherein a respective weight coefficient is associated with a parameter of the SoC parameters, to determine or estimate the accuracy value that is indicative of the accuracy of the SoC that is reported by the BMS. Thus, it becomes possible to assess how accurate the SoC reported by the BMS is, and whether a full charge or full discharge of the ESS is warranted to calibrate the SoC of the ESS. In this way, the full charge or full discharge of the ESS may be instructed to be performed less frequently, which is beneficial for improving durability and extending a lifetime of the ESS.

In some examples, the accuracy value indicative of the accuracy of the SoC may be determined based on the SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start OCV of the ESS, a cycle end OCV of the ESS, and an operating time since a last SoC calibration of the ESS.

In some examples, the ESS is configured to be used as an internal power source by the system. For example, in an electric vehicle, the electrical power stored in the ESS is used to power a propulsion system of the vehicle. In some examples, the ESS may be configured to provide the stored electrical power to an external power consumer and/or to the grid. In some examples, the system may be an electric vehicle. The electric vehicle may be a fuel cell vehicle or a battery electric vehicle. In some examples, the system may comprise a battery energy storage system (BESS). In some examples, the system may comprise a marine vessel.

In an aspect, a method for controlling an ESS system comprising an ESS is provided. The method comprises obtaining an accuracy value indicative of an accuracy of a SoC of the ESS; and in response to the accuracy value being below a SoC accuracy threshold, a next time the ESS is to be charged or discharged, instructing the ESS to be charged to a full charge level or to be fully discharged, and initiating a SoC calibration of the ESS.

The technical benefits may include determining the SoC of the ESS, such as a battery, with increased precision and reliability. Thus, the ESS and/or a system comprising the ESS, such as e.g. an electric vehicle or a BESS, can benefit from a more accurate estimation of the SoC and thus of energy available for use by a consumer. A number of times the ESS is fully charged or fully discharged is decreased, due to determining whether such event is required to calibrate or recalibrate the SoC of the ESS. Thus, a number of deep charge-discharge cycles is decreased. In this way, a risk of deterioration of the ESS is reduced, which leads to increasing durability and lifespan of the ESS. The ageing of the ESS may be delayed, which reduces a risk of failures.

In some examples, in response to the accuracy value being below the SoC accuracy threshold, the method may comprise determining whether the ESS is to be charged to the full charge level or whether the ESS is to be fully discharged.

In some examples, the method may comprise, after the ESS has been charged to the full charge level or fully discharged and the SoC of the ESS has been calibrated, setting the accuracy value to a maximum accuracy value.

In some examples, the method may comprise, in response to the accuracy value being above the SoC accuracy threshold, generating an indication that is different from instructing the ESS to be charged to a full charge level or to be fully discharged.

In some examples, the accuracy value indicative of the accuracy of the SoC may be determined based on one or more SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start open circuit voltage (OCV) of the ESS, a cycle end OCV of the ESS, and an operating time since a last SoC calibration of the ESS.

According to an aspect of the disclosure, a computer program product is provided that comprises computer-executable instructions, which, when executed by processing circuitry, cause the processing circuitry to perform the method in accordance with examples of the present disclosure.

The technical benefits of the computer program may be the same or similar to those achieved by the method in accordance with any one or more examples of the present disclosure, as discussed above. Further, all embodiments of the method are applicable to and combinable with all embodiments of the computer program according to the examples herein, and vice versa.

According to an aspect of the disclosure, a tangible non-transitory computer-readable storage medium is provided. The tangible non-transitory computer-readable storage medium has stored thereon a computer program product comprising computer-executable instructions which, when executed by processing circuitry, cause the processing circuitry to perform the method in accordance with examples of the present disclosure.

The technical benefits of the tangible non-transitory computer-readable storage medium may be the same or similar to those achieved by the method in accordance with any one or more examples of the present disclosure, as discussed above. Further, all embodiments of the method are applicable to and combinable with all embodiments of the tangible non-transitory computer-readable storage medium according to the examples herein, and vice versa.

According to an aspect of the disclosure, a battery management system for an energy storage system (ESS) system comprising an ESS is provided. The ESS may be a battery. The battery management system is configured to obtain a value of a SoC of the ESS, determine an accuracy value indicative of an accuracy of the SoC of the ESS, and provide the accuracy value to a control device configured to control operation of the ESS system.

The battery management system may be configured to determine the accuracy value indicative of an accuracy of the SoC of the ESS using the methods in accordance with examples of the present disclosure.

The technical benefits may include determining the SoC of the ESS, such as a battery, with increased precision and reliability. A number of times the ESS is fully charged or fully discharged is decreased, due to determining whether such event is required to calibrate or recalibrate the SoC of the ESS. Thus, a number of deep or full charge-discharge cycles is decreased. In this way, deterioration of the ESS is reduced, which leads to increasing durability and lifetime of the ESS. As another technical benefit, the availability of the system, e.g., an electric or hybrid vehicle or a BESS, is increased due to the reduction in the number of full charge and/or full discharge events.

The control device and the battery management system may be included in a system or application such as a mobile or stationary system.

In some examples, the accuracy value indicative of the accuracy of the SoC may be determined based on one or more SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start Open Circuit Voltage (OCV) of the ESS, a cycle end OCV of the ESS, and an operating time since a last SoC calibration of the ESS.

In some examples, the accuracy value indicative of the accuracy of the SoC may be determined based on the SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start Open Circuit Voltage (OCV) of the ESS, a cycle end OCV of the ESS, and an operating time since a last SoC calibration of the ESS.

In some examples, the one or more SoC parameters may be associated with respective weight coefficients for determining the accuracy value indicative of the accuracy of the SoC.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1A** is a block diagram illustrating an example of a system in which a method in accordance with aspects of the present disclosure may be implemented.
**FIG.** 1B is a block diagram illustrating an example of another system in which a method in accordance with aspects of the present disclosure may be implemented.
**FIG. 2** illustrates a side view of an example of an electric vehicle in which a method in accordance with aspects of the present disclosure may be implemented.
**FIG. 3A** is a flow chart illustrating an example of a method for controlling an energy storage system (ESS) system, in accordance with aspects and examples of the present disclosure.
**FIG. 3B** is another flow chart illustrating an example of the method of FIG. 3A, in accordance with aspects and examples of the present disclosure.
**FIG.** 4 illustrates an example of parameters that may be used to determine an accuracy value indicative of an accuracy of a SoC of the ESS, in accordance with aspects and examples of the present disclosure.
**FIG. 5** illustrates an example of a process for determining an internal resistance (IR)-based SoC accuracy value of the ESS, in accordance with an example.
**FIG. 6** illustrates an example of a method for determining a capacity-based SoC accuracy value of the ESS, in accordance with an example.
**FIG. 7** is a schematic diagram of a computer system for implementing examples in accordance with the present disclosure.

### DETAILED DESCRIPTION

The detailed description set forth below provides information and examples of the disclosed technology with sufficient detail to enable those skilled in the art to practice the disclosure.

Electrical storage systems (ESS) such as batteries are increasingly used in various applications comprising energy systems. For example, electrical vehicles, marine vessels, and aircraft may employ electrical batteries, e.g., a lithium-ion (Li-ion) battery. Li-ion batteries are widely used in electric vehicles and vessels, as well as in other applications. At the same time, certain features of Li-ion batteries may reduce their performance, charging time and durability, which affects their adoption in electric vehicles. For example, each charge-discharge cycle of a Li-ion battery contributes to deterioration and ageing of the battery.

Various stationary systems use storage batteries that may help to stabilize the grid during peak demands, provide backup power during outages, and facilitate integration of renewable energy. As part of their role in grid stabilization, storage batteries can discharge stored electricity to the grid and absorb excess electricity and thus prevent the grid from overloading. The batteries can also serve as a backup power source. Electrical vehicles charging stations may employ the energy storage system.

Challenges exist that relate to operation and/or control of the energy storage batteries, such as degradation of the battery's ability to hold the charge with time and a relatively limited lifespan. One of the main sources that affect the capacity, durability, and thus a lifetime of the battery is a number of deep/full charge-discharge cycles. A battery undergoes multiple charge-discharge cycles during its lifetime as part of its normal use. A state of charge (SoC) of the battery is calibrated or recalibrated when the battery is fully charged or discharged. Thus, although fully charging and discharging the battery may be required, every full charge event and full discharge event may have a negative impact on the battery. Also, it may be detrimental for the battery when it is stored or rested at a high, such as e.g. close to 100% or 100%, SoC. Furthermore, a full charge of the ESS or a full discharge of the battery may be performed when a corresponding input is received from a user, such that the user decides when to fully charge or discharge the battery. Accordingly, there is a need in reducing the number of full charge and full discharge events for the ESS, and performing these events in a more controlled manner.

Techniques in accordance with examples of the present technology are provided that allow determining whether the ESS is to be charged to a full charge level or to be fully discharged, and automatically instructing the ESS to be charged to the full charge level or to be fully discharged. The techniques may be implemented in various systems comprising an ESS such as a rechargeable battery. The systems, also referred to as applications, may be motive or stationary, or a combination thereof. The battery or battery pack may comprise one or more battery cells. The battery may be a Li-ion, lead-acid, nickel-metal hydride battery, or other types of battery capable of storing and discharging electrical energy through reversible oxidation-reduction reactions. In some examples, the battery may be a Li-ion battery. In some examples, the Li-ion battery may be a lithium ferro-phosphate (LFP) battery.

A method for determining an accuracy of the SoC of the ESS is provided that allows reducing the number of full charge and full discharge events or cycles to which the ESS undergoes. In this way, the durability and the lifespan of the ESS are increased. This in turn contributes to the improved maintenance and operation of the system including the ESS, such as an electric vehicle, a hybrid vehicle, a marine vessel comprising the ESS, a battery energy storage system (BESS), a system comprising the BESS, etc.

The SoC of the battery denotes a difference between a fully charged battery and the same battery in use. It is associated with the remaining quantity of stored energy/stored charge in the battery. The SoC is expressed as a percentage of the battery's total storage capacity. Thus, when the battery is fully charged, the SOC is considered to be 100%, and when it is completely discharged empty, the SOC is considered to be 0%. It should be appreciated that in reality the full charge or the full discharge may not occur, even though the battery may be considered to be fully charged or discharged, respectively, and corresponding indications may be generated and presented to a user or a controller managing the system comprising the battery. For the purposes of the present disclosure, it is assumed that the ESS is fully charged such that the SOC is 100% or fully discharged such that the SoC is 0%.

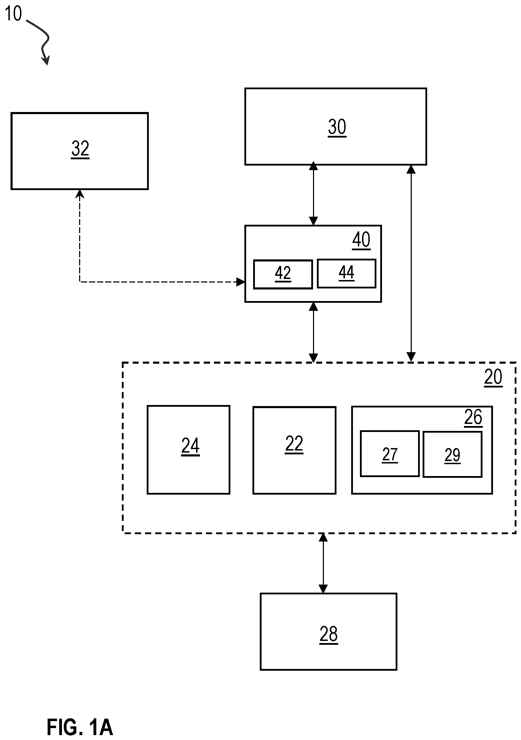

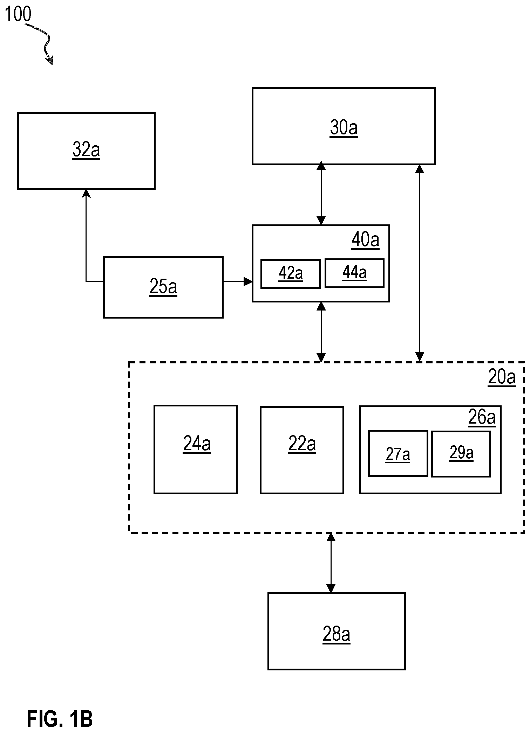

**FIGs. 1A** and **1B** illustrate schematically examples of systems in which the techniques in accordance with the examples of the present disclosure may be implemented. A system includes the ESS and the system may be or may be included in a mobile system such as a vehicle, or in a stationary system.

**FIG. 1A** illustrates a system 10 in which the techniques in accordance with the examples of the present disclosure may be implemented. The system 10 may be or may be included in a stationary system comprising an ESS. In some examples, the system 10 may be deployed in a marine vessel.

As shown in FIG. 1A, the system 10 including the ESS may comprise an ESS system 20 comprising an ESS 22, a charging system 24, and a battery management system (BMS) 26. The ESS system 20 may be, e.g., a battery unit or system encompassing the ESS such as the battery or battery pack, as well as the BMS and the charging system. The ESS system 20 may be referred to as an energy management system or an energy control unit. The ESS system 20 may comprise other components. It should be appreciated that the ESS system 20 may not be a separate component in the system 10 but rather represents components in which the techniques in accordance with examples of the present disclosure may be implemented. Furthermore, in some implementations, the charging system or charger configured to charge and/or discharge the ESS may be considered to be outside of the ESS system 20.

The ESS system 20 may in some examples be a BESS which may comprise other components not shown herein such as a thermal management system, inverters, an output transformer, various safety features and controls, and other features. The BESS may be configured to operate as a dynamic energy storage and power provider. It accumulates excess energy generated by solar panels or surplus power produced by a generator, e.g., a diesel generator. In some examples, ESS system 20 may be included in an electric vertical takeoff and landing (eVTOL) aircraft.

Operation of the ESS system 20 may be controlled by a control system or device 40, which may be a suitable control device or system. In some examples, the ESS system 20 may be included in a BESS.

The ESS 22 may be a rechargeable battery, e.g. a battery pack comprising one or more battery cells. The battery may be a Li-ion, lead-acid, nickel-metal hydride battery, or another type of battery capable of storing and discharging electrical energy through reversible oxidation-reduction reactions. In some examples, the Li-ion battery may be a lithium ferro-phosphate (LFP) battery.

The BMS 26 may be an electronic system configured to monitor operational variables and manage operation of the ESS 22 and in some implementations of the ESS system 20. The BMS 26 is configured to monitor a state of the ESS 22 and to report parameters related to the state of the ESS 22. The BMS 26 is configured to acquire current, voltage, temperature, and/or other measurements from the ESS 22. The BMS 26 may be configured to estimate or determine a SoC of the ESS 22 and to provide the SoC to the control device 40. The BMS 26 may be configured to determine other parameters related to state or condition of the ESS 22 such as power capability estimation, a state of health, and others. The BMS 26 may be configured to perform thermal management and fault diagnosis of the ESS 22.

As shown in FIG. 1A, the BMS 26 may comprise processing circuitry 27 such as one or more processors, and memory or memory device 29 configured to store computer-executable instructions that, when executed by the processing circuitry 27, may cause the processing circuitry 27 to perform functions of the BMS 26. In some examples, the computer-executable instructions, when executed by the processing circuitry 27, may cause the processing circuitry 27 to obtain or determine or calculate the accuracy value indicative of an accuracy of the SoC of the ESS 22, in accordance with examples of the present disclosure. The BMS 26 may comprise other devices and components such as e.g. a communication interface configured to communicate with other components.

Instructions to the ESS system 20 from the control device 40 may be received by the BMS 26 that conveys the instructions to the ESS 22 and other components of the ESS system 20. In some implementations, the BMS 26 may be configured to estimate the SoC of the ESS 22 and to report the estimated SoC to the control device 40, which may determine the accuracy values of the SoC using the method in accordance with examples of the present disclosure. In some examples, the BMS 26 may be configured to determine the accuracy value indicative of the accuracy of the SoC. The SoC estimated or determined by the BMS 26 may be a value that is reported in existing ESS systems. The BMS 26 may have a built-in functionality that can estimate the SoC of the ESS 22 at any point in time. Inaccuracies in estimating the SoC may accumulate in time, and these inaccuracies may be mitigated using the method in accordance with examples of the present disclosure.

The charging system 24 is configured to control charging and discharging of the ESS 22. The charging system 24 may also be referred to as a charger, discharger, or charger/discharger.

It should be appreciated that the BMS 26 and the charging system 24 are shown to be included in the ESS system 20 for illustration purposes only, as various configurations of the components are possible. Thus, in some examples, the charging system 24 may be separate from the ESS system 20.

The ESS system 20 is configured to provide stored energy or power to a power consumer 28. The BESS may comprise a power conversion system (PCS) that is configured to convert direct current (DC) from the ESS 22, such as batteries, to alternating current (AC), which can be used by the power consumer 28, such as a suitable electrical system or the grid. The power consumer 28 may be any suitable system, device or machine that is configured to receive electrical energy or power stored in the ESS 22. In some cases, the BESS may be positioned in an off-grid location where it can be charged using e.g. one or more renewable energy sources, or using a fuel-powered generator.

Operation of the ESS system 20 may be controlled by the control device 40. The control device 40 comprises processing circuitry 42, e.g., one or more processors, and a memory device 44 storing computer-executable instructions, the processing circuitry 42 being configured to execute the computer-executable instructions to perform a method in accordance with examples of the present disclosure.

The control device 40 may be an electronic control unit (ECU). The control device 40 may include a microprocessor, microcontroller, programmable digital signal processor or another programmable device. The control device 40 can communicate with different parts of the system 10 in order to provide the functions of the examples in accordance with aspects of the present disclosure. In some examples, the control device 40 may be denoted a computer. The control device 40 may be constituted by one or more separate sub-units, and the control device 40 may communicate by use of wired and/or wireless communication technology.

As shown schematically in FIG. 1A, the control device 40 may communicate with a user interface 30 which may be configured to present information on a status of the ESS 22 to the user, and to receive input from the user regarding operation of the ESS system 20 and/or the ESS 22. The user interface 30 may be included in or may be a human-machine interface (HMI) onboard the system 10. For example, the HMI may be a dashboard on the system 10 which may be a machine, system, or device.

In some cases, the control device 40 may be connected, e.g. via a wireless communications network, with a remote system 32, such as a cloud storage or another device, system, or service. The remote system 32 may comprise multiple e.g. distributed data storage systems. The control device 40 may receive various information from the remote system 32 and it may store information on the remote system 32.

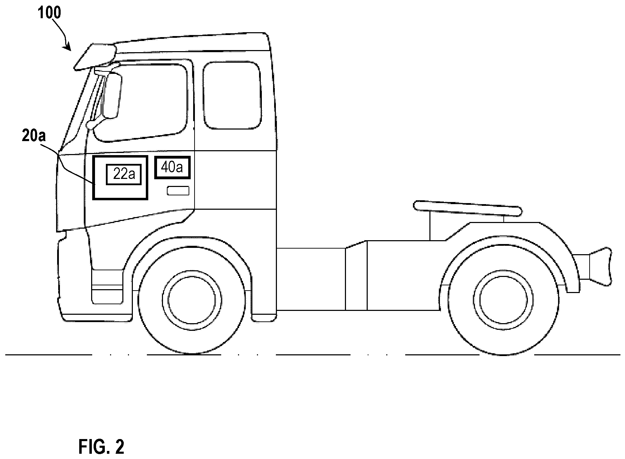

**FIG. 1B** illustrates another example of a system 100 in which the techniques in accordance with the examples of the present disclosure may be implemented. In this example, as shown in FIG. 2, the system 100 comprises an electric vehicle. The electric vehicle 100 is shown as a truck, such as a heavy-duty truck for towing one or more trailers. It should be appreciated that the present disclosure is not limited to any specific type of an electric vehicle, and may be used for any other type of an electric vehicle, such as a bus, construction equipment, e.g. a wheel loader or an excavator, a passenger car, an aircraft, and a marine vessel.

The present disclosure can be applied to heavy-duty vehicles, such as trucks, buses, and construction equipment, among other vehicle types. Although the disclosure may be described with respect to a particular vehicle, the disclosure is not restricted to any particular vehicle.

In some examples, the electric vehicle 100 comprises a fuel cell electric vehicle (FCEV). In some examples, the electric vehicle comprises a battery electric vehicle (BEV). In some examples, the electric vehicle comprises a hybrid electric vehicle (HEV). A HEV may comprise an internal combustion engine (ICE) and one or more electric motors that can use energy stored in the ESS. The electric vehicle may be any type of an electric vehicle comprising an ESS such as e.g. one or more batteries or battery cells or a battery pack.

The electric vehicle 100 comprises an ESS system 20a comprising an ESS 22a, a charging system 24a, and a BMS 26a. The ESS 22a can provide stored electrical energy to a vehicle propulsion system 28a comprising an electric motor (not shown). The ESS 22a may be configured to store regenerative braking energy. In a HEV, the regenerative braking energy may be received by the ESS 22a from an ICE.

The ESS system 20a may comprise other components. It should be appreciated that the ESS system 20a may not be a separate component in the electric vehicle 100 but rather represents components in which the techniques in accordance with examples of the present disclosure may be implemented.

The ESS 22a may be a rechargeable battery, e.g. a battery pack comprising one or more battery cells. The battery may be a Li-ion battery. The Li-ion battery may be an LFP battery.

In some examples, the battery may be lead-acid, nickel-metal hydride battery, or another type of battery capable of storing and discharging electrical energy through reversible oxidation-reduction reactions.

The BMS 26a may be an electronic system configured to manage operation of the ESS 22a and of the ESS system 20a. The BMS 26a is configured to acquire current, voltage, temperature, and/or other measurements from the ESS 22a. The BMS 26a may be configured to determine a SoC of the ESS 22a and to provide the SoC to a control system or device 40a. The BMS 26a may be configured to determine other parameters related to state or condition of the ESS 22a such as power capability estimation, a state of health, and others. The BMS 26a may be configured to perform thermal management and fault diagnosis of the ESS 22a.

As shown in FIG. 1B, the BMS 26a may comprise processing circuitry 27a such as one or more processors, and memory or memory device 29a configured to store computer-executable instructions that, when executed by the processing circuitry 27a, may cause the processing circuitry 27a to perform functions of the BMS 26a. In some examples, the computer-executable instructions, when executed by the processing circuitry 27a, may cause the processing circuitry 27a to obtain or determine or calculate the accuracy value indicative of an accuracy of the SoC of the ESS 22a, in accordance with examples of the present disclosure. The BMS 26a may comprise other devices and components such as e.g. a communication interface configured to communicate with other components.

Instructions to the ESS system 20a from the control device 40a may be received by the BMS 26a that conveys the instructions to the ESS 22a and other components of the ESS system 20a. In some implementations, the BMS 26a may be configured to estimate the SoC of the ESS 22a and to report the estimated SoC to the control device 40a, which may determine the accuracy values of the SoC using the method in accordance with examples of the present disclosure. In some examples, the BMS 26a may determine the accuracy value indicative of the accuracy of the SoC of the ESS 22a. The SoC estimated by the BMS 26a may be a value that is reported in existing ESS systems. The BMS 26a may have a built-in functionality that can estimate the SoC of the ESS 22a at any point in time. Inaccuracies in estimating the SoC may accumulate in time, and these inaccuracies may be mitigated using the method in accordance with examples of the present disclosure.

The charging system 24a is configured to control charging and discharging of the ESS 22a. The charging system 24a may be configured to charge/discharge the ESS 22a when the vehicle 100 is in contact with an external power supply, e.g., a grid or another source. In some examples, the charging system 24a may be configured to allow the ESS 22a to be charged/discharged in a non-contact manner.

It should be appreciated that the BMS 26a and the charging system 24a are shown to be included in the ESS system 20a for illustration purposes only, as various configurations of the components are possible. Thus, in some examples, the charging system 24a may be separate from the ESS system 20a.

As shown in FIG. 1B, the electric vehicle 100 comprises a control device 40a such as a vehicle control unit. The vehicle control unit 40a comprises processing circuitry 42a, e.g., one or more processors, and a memory device 44a storing computer-executable instructions, the processing circuitry 42a being configured to execute the computer-executable instructions to perform a method in accordance with examples of the present disclosure. The processing circuitry 42a may be a general purpose processor or a specific processor.

The control device 40a may be an electronic control unit (ECU). The control device 40a may include a microprocessor, microcontroller, programmable digital signal processor or another programmable device. The control device 40a can communicate with different parts of the system 100 in order to provide the functions of the examples in accordance with aspects of the present disclosure. In some examples, the control device 40a may be denoted a computer. The control device 40a may be constituted by one or more separate sub-units, and the control device 40a may communicate by use of wired and/or wireless communication technology.

The electric vehicle 100 may comprise a telematics control unit 25a configured to connect the vehicle 100 via a wireless communications network to a remote system 32a e.g. a cloud server or service. In some examples, the remote system 32a may be a fleet controller configured to control operation of multiple vehicles in a fleet of vehicles. The electric vehicle 100 may be part of the fleet of vehicles, and the control device 40a of the electric vehicle 100 may communicate with the fleet controller e.g. to receive instructions from the fleet controller regarding assigned routes, maintenance, etc. The fleet controller may acquire information from the vehicle 100, such as e.g. information on a position of the vehicle, a status of the vehicle including a status of the ESS of the vehicle, and other types of information.

The configuration of the components shown in FIG. 1B may be generally similar to the configuration of the components shown in FIG. 1A. Regardless of its specific configuration, a system in accordance with examples of the present disclosure comprises a computer system, e.g., a control system or device such as control systems 40, 40a, which is configured to determine or obtain, e.g. from the BMS, an accuracy value indicative of the accuracy of the state of charge (SoC) of the ESS and to determine, based on the accuracy value, whether it is warranted to perform a full charge or in some cases a full discharge of the ESS.

It should be appreciated that the systems 10 and 100 may comprise various other components that are not shown for the sake of brevity. It should also be appreciated that boundaries drawn in FIGs. 1A, 1B, and 2 are for illustrative purposes only, as the components may have any suitable physical boundaries. For example, in some implementations, the charging system configured to charge the ESS may be outside the component referred to as the ESS system.

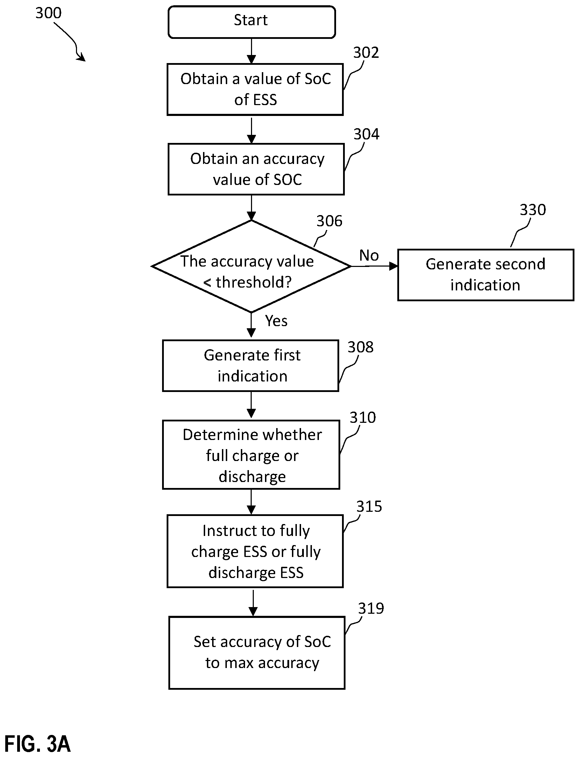

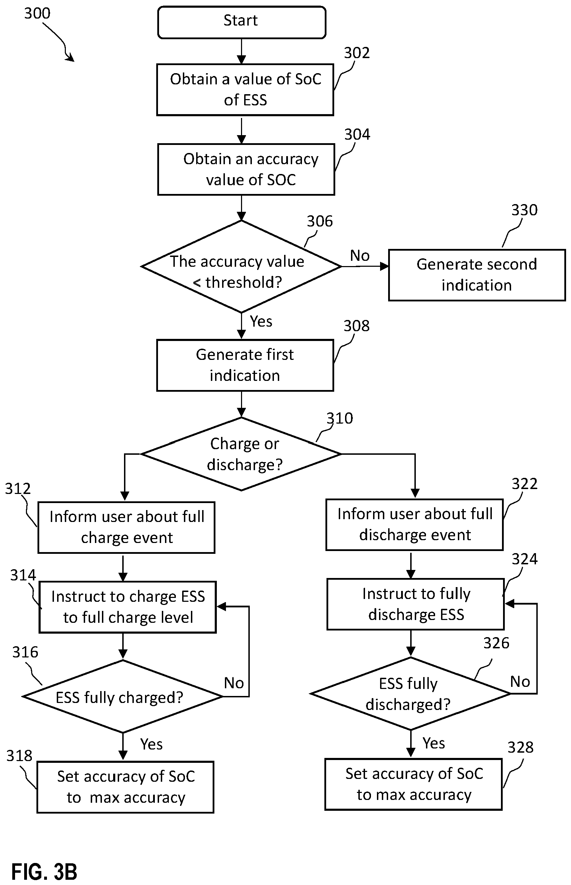

**FIGs. 3A** and **3B** are flowcharts illustrating a method 300 for controlling an ESS of a system, e.g., an electric vehicle comprising the ESS or a stationary system comprising the ESS. In some examples, the system comprising the ESS may be a battery energy storage system (BESS). The BESS may be associated with a generator, solar panels, wind turbines, or other renewable energy sources. The BESS may be configured to operate in combination with a diesel-powered generator in a BESS-diesel hybrid system. The BESS may be used in a stationary system e.g. a computer datacenter comprising multiple processors. The BESS may be used in an electric vehicle charging station. The BESS may also be used in a marine vessel or in an aircraft. The system may be system 10 shown in FIG. 1A or system 100 shown in FIGs. 1B and 2.

The method 300 may be performed by a system such as system 10, or system 100, or any other system comprising an ESS. In some examples, the method 300 may be performed by a control unit or control device, such as e.g. control device 40 shown in FIGs. 1A, or control device 40a shown in FIG. 1B. The control device comprises processing circuitry, e.g., one or more processors, and a memory device storing computer-executable instructions, the processing circuitry being configured to execute the computer-executable instructions to perform the process or method 300. In some examples, the method 300 may be performed by the control device and a battery management system such as the BMS 26 or BMS 26a. For example, in some examples, the control device may determine the accuracy value indicative of the accuracy of the SoC. In some examples, the BMS may determine the accuracy value indicative of the accuracy of the SoC and provide the accuracy value to the control device.

The process 300 may start at any suitable time during operation of the system comprising the ESS. It should be appreciated that the order of the processing at the blocks of FIGs. 3A and 3B is shown as an example, as another suitable order may be possible.

At **block 302,** the method may comprise obtaining or acquiring a SoC of the ESS. The SoC, also referred to as a value of the SoC, may be provided by the ESS as part of functionality of the ESS. This is the value that is provided regardless of whether or not the method 300 is implemented, and this is the value which accuracy is improved using the techniques described herein. The SoC value may be obtained from the BMS that is configured to obtain the SoC from the ESS.

At **block 304,** the method comprises obtaining an accuracy value indicative of an accuracy of the SoC. Obtaining the accuracy value may comprise determining the accuracy value or acquiring the accuracy value. The determining the accuracy value may refer to calculating or estimating or establishing the accuracy value. In some examples, the control device may acquire or receive the accuracy value indicative of an accuracy of the SoC from a BMS of the ESS system, such that the accuracy value is obtained from the BMS.

The accuracy value is used to determine whether a SoC recalibration or calibration, e.g., an OCV calibration, is required due to an accumulated inaccuracy of the SoC as provided by the ESS. It should be noted that the accuracy may be determined independently of the SoC, in the sense that the determined accuracy value indicative of the accuracy of the SoC may not depend on the actual value of the SoC.

The accuracy value may be obtained and/or determined by the control device. In some examples, the accuracy value may be determined by the BMS such that the control device may receive the accuracy value from the BMS.

In some examples, the accuracy value indicative of the accuracy of the SoC may be determined based on one or more parameters, referred to as SoC parameters, comprising an internal resistance of the ESS, a cell voltage delta of the ESS, a cell voltage of the ESS, a rate of change of the cell voltage delta of the ESS, a charged/discharged capacity in a current cycle of the ESS, a cycle start OCV of the ESS, a cycle end OCV of the ESS, and an operating time since a last SoC calibration of the ESS. The cell voltage refers to voltage of individual cells within the ESS, such as the battery or battery pack or system. The SoC parameters are ESS state parameters and they may be stored in a suitable memory, e.g., in a memory of the BMS and/or in the memory of the control device. For example, memory 29 of the BMS 26 may store these parameters. The memory 29a of the BMS 26a may also store these parameters. The parameters are updated as the ESS is in use. In some examples, the SoC parameters may be obtained by the BMS that provides these parameters to the control device.

A cycle or usage cycle of the ESS is defined as a charging/discharging cycle that the ESS undergoes. The cycle start OCV of the ESS refers to OCV when the ESS, also referred to as a battery, is started to be used, such as charged or discharged, for the current usage cycle. The cycle end OCV of the ESS is OCV when the battery is stopped being used and is in a rest state/non-usage state for a period of time which allows the cell voltages in the battery to return to their relaxed values. The cell voltage delta of the ESS may be defined as a difference of the cell voltages in the battery i.e. a difference between voltage of the cells of the battery. Such cell voltage differences may change during charge and discharge of the battery, which may be referred to as a rate of change. The charged/discharged capacity refers to a range of a depth of discharge (DoD) of the ESS, from the bottom to the top. The charged/discharged capacity may be used to determine a charge/discharge coulombic efficiency which is defined as a ratio of the charged/discharged capacity at a non-rated condition to the charged/discharged capacity at a rated condition.

In some examples, the accuracy value indicative of the accuracy of the SoC may be determined based on the internal resistance of the ESS, the cell voltage delta of the ESS, the cell voltage of the ESS, the rate of change of the cell voltage delta of the ESS, the charged/discharged capacity in the current cycle of the ESS, the cycle start OCV of the ESS, the cycle end OCV of the ESS, and/or an operating time since a last SoC calibration of the ESS.

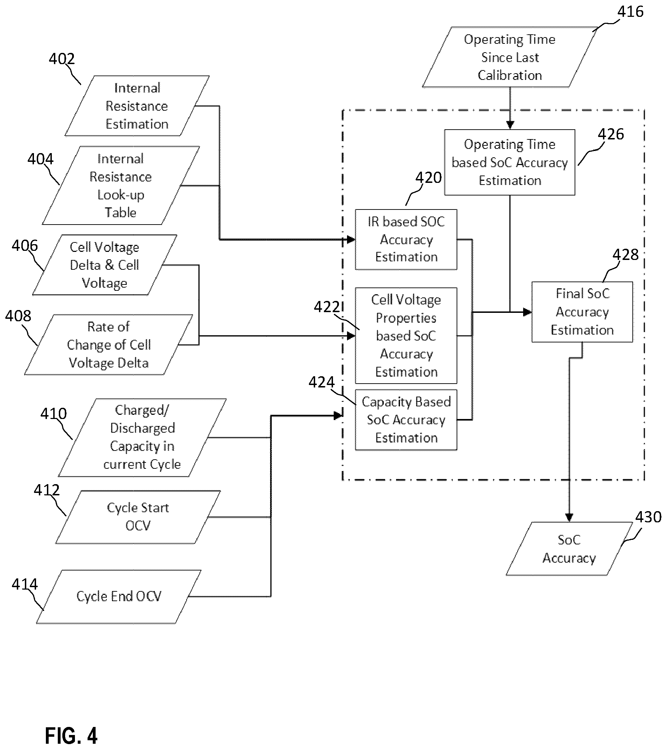

The accuracy value may be determined as discussed below in connection with FIGs. 4-6. Thus, the processing at block 304 may include the processing as shown in connection with FIGs. 4-6.

Other parameters may be used to determine the accuracy value. For example, a value of an accuracy of the current measurements may additionally be used in determining the accuracy value.

At decision **block 306,** the method may determine whether the accuracy value is below a SoC accuracy threshold. The SoC accuracy threshold may be a value that is used to determine whether the accuracy value indicative of the accuracy of the SoC is sufficiently high such that it reliably and accurately reflects the actual SoC. In some examples, the SoC accuracy threshold may be 80%. In some examples, the accuracy threshold may be 90%. In some examples, the SoC accuracy threshold may be any value in a range of from 80% to 100%.

If the accuracy value is above the SoC accuracy threshold, this indicates that the accuracy, indicative of the accuracy of the SoC, is sufficiently high such that there is no need for SoC recalibration/calibration of the SoC of the ESS.

If the accuracy value is below the SoC accuracy threshold, this indicates that the accuracy is not sufficiently high such that a SoC recalibration/calibration of the ESS may be required so that the SoC of the ESS may be determined with higher precision.

At **block 308,** in response to the accuracy value being above the SoC accuracy threshold, the method may generate an indication referred to as a first indication instructing the ESS to be charged to a full charge level or to be fully discharged. The first indication is an automatic indication provided to the ESS and/or a charging system, such that the first indication is generated by the control device.

At **block 310,** in response to the accuracy value being below the SoC accuracy threshold, the method may determine whether the ESS is to be charged to the full charge level or whether the ESS is to be fully discharged. In some examples, the determining at block 310 may be performed based on the SoC obtained as described in connection with the processing at block 302. Thus, in some examples, the processing circuitry of the control device may compare the SoC to a SoC threshold value and, depending on whether the SoC is below or above the SoC threshold value, determine whether the full charge or the full discharge of the ESS is to be automatically instructed. The SoC threshold value may be, for example, 50% such that, when the SoC is at or above 50%, the method may determine that the ESS is to be charged to the full charge level, and when the SoC is below 50%, the method may determine that the ESS is to be fully discharged.

The determining at block 310 is also performed based on availability of charge or discharge devices/sources and based on an application employing the ESS i.e. a type of the system including the ESS. Thus, in motive applications, such as in electric or hybrid vehicles, a full discharge of the ESS may not be desirable or even possible in some cases, and the determining whether the ESS is to be charged to the full charge level or to be fully discharged may result in determining that the ESS is to be charged to the full charge level. In a hybrid vehicle, or in other types of hybrid applications, the full discharge of the ESS may be performed in some cases. In a BESS, an ESS may also be fully discharged.

The SoC threshold value may be any suitable value or it may be a range of values. The SoC threshold value may be adjustable, in some cases automatically, e.g., depending on the SoC and on certain features or parameters related to operating of the vehicle comprising the SoC. For example, if the vehicle is located at a certain distance to a charging station or location, the SoC threshold value may be lower than in cases when the vehicle is at a distance that is greater than the certain distance i.e. farther away from the charging station or location.

In some examples, the SoC threshold value may depend on whether, given the SoC obtained as the processing at block 302, it is estimated that it will be faster to charge the ESS to the full charge level or to fully discharge the ESS. Eigher the charging or discharging may be automatically instructed when the ESS is in a state appropriate for charging or discharging, e.g., being connected to the grid, or in contact or proximity to another power source.

At **block 315,** the method may comprise, in response to the accuracy value being below the SoC accuracy threshold, a next time the ESS is to be charged or discharged, instructing the ESS to be charged to a full charge level or to be fully discharged, and initiating a SoC calibration of the ESS. In some examples, the processing at block 308, above, may be performed as part of the processing at block 315, such that the first indication may be generated as part of instructing the ESS to be charged to the full charge level or to be fully discharged. Instructing the ESS to be charged to the full charge level or to be fully discharged may comprise instructing the charging system, e.g., charging system 24 or charging system 24a to charge the ESS to the full charge level i.e. to a level of 100% SoC, or to discharge the ESS fully i.e. to a level of 0% SoC. The next time the ESS is to be charged or discharged may be an appropriate time and circumstances at which the ESS can be fully charged or discharged.

The ESS may be instructed to be charged to the full charge level or to be fully discharged based on a type of the system in which the ESS is included. In some examples, the ESS included in a BESS application may be instructed to be charged or discharged as soon as it is determined that the full charge or discharge is needed when the accuracy value is below the SoC accuracy threshold. When it is determined that the accuracy value is below the SoC accuracy threshold for the electric vehicle, the vehicle may be in circumstances in which the full charge of the ESS may not be possible, e.g. when the vehicle is traveling on a road. Thus, the ESS of the vehicle may be instructed to be charged to the full charge level when the vehicle arrives at a charging point or station and connects to the grid or another power source.

In some examples, the ESS may be fully charged when the mobile or stationary system comprising the ESS is coupled to a power source, e.g., a grid, and the ESS and/or the charging system configured to charge the ESS is operating so that the ESS is charged to the full charge level or to 100%. For example, when the electric or hybrid vehicle comprising the ESS is connected to the grid, it can be fully charged, based on the first indication and determining that the ESS is to be charged to the full charge level.

In some examples, the ESS included in the electric vehicle may be fully discharged when the vehicle is connected to a grid. In some cases, the ESS included in the electric vehicle may be only charged to the full charge level and it is not fully discharged.

The SoC calibration of the ESS, also referred to as the calibration of a SoC of the ESS, may be initiated or triggered, and performed as controlled by the control system or device, once the ESS is fully charged or fully discharged. The SoC calibration may be, e.g., an open circuit voltage (OCV) calibration. The OCV is the voltage measured when the battery has no external load after resting for a specified period. The OCV can be used to determine the SoC of a battery by comparing it with an OCV curve relative to the SoC, for example, using a lookup table approach. A SoC-OCV calibration may be performed using any suitable approach, such as an approach as known in the art.

The ESS included in the BESS may be fully discharged, e.g., during a period of a high demand or load on the BESS. The BESS may be used in an off-grid location where it is not coupled to the grid.

In some examples, the control device may instruct the ESS to be charged to a full charge level or to be fully discharged in dependance on one or more of a state of the ESS, a state of a system comprising the ESS, a state of a power consumer that can receive power stored in the ESS, a state of the grid, and other factors. The control device may receive or obtain various information about a state of the system including the ESS, a state of the ESS, etc. and it may determine when charging the ESS to the full charge level or fully discharging the ESS is to be performed. In this way, the next time the ESS is to be charged or discharged may be determined by taking into consideration one or more of the state of the ESS, the state of a system comprising the ESS, the state of a power consumer that can receive power stored in the ESS, the state of the grid, and other factors. The control device may store or acquire, from other components or systems, data on history of operating of the ESS including on prior full charge events and/or full discharge events. The control device may be aware of a location of the system comprising the ESS, e.g. using a Global Positioning System (GPS) for an electric vehicle, a planned use of the ESS, and other features. Depending on whether the ESS is operating as part of a mobile system or application such as a vehicle, or whether the ESS is part of a stationary system which may be operating to balance fluctuations in the load on the grid, a power consumer can benefit from the ESS being fully charged or discharged at different points in time and based on different factors.

Thus, if, for example, a full charge event is possible, but charging the ESS to the full charge level is not reasonable at a particular point in time, the full charge event may be postponed. This may be performed automatically, such that the time point which is referred to as the next time the ESS is to be charged or discharged may be when the full charge of the ESS is beneficial for the system relying on the ESS as a source of electrical power. For example, the control device may determine that the ESS is not going to be used for a certain period of time, such that a full charge, to a 100% of SoC, may not be required, to avoid storing the ESS at the full charge for an extended period of time. As another example, it may not be desirable to fully discharge the ESS at certain points in time, such that the full discharge event may be postponed.

In some examples, a user input may be received instructing the control device to postpone the full charge or full discharge event for the ESS. Accordingly, in some examples, the next time the ESS is to be charged or discharged may be determined or adjusted based at least in part of a user input instructing the control device to postpone the full charge or full discharge event for the ESS.

The method in accordance with examples of the present disclosure advantageously allows decreasing a number of full discharge and/or full charge events for the ESS, because the ESS is instructed to be fully charged or fully discharged only in response to determining that the accuracy value, indicative of the accuracy of the SoC of the ESS, needs to be reset. The resetting of the accuracy value is done after the SoC (re)calibration of the ESS that is performed after the ESS has been fully charged or fully discharged.

Reducing the number of full discharge and/or full charge events for the ESS allows slowing down a deterioration of the ESS, which improves the ESS availability, safety, durability, and extends the lifetime of the ESS. Moreover, as another advantage, a number of time periods when the ESS is not available, due to being fully charged or discharged, is decreased. For example, fully charging a battery at certain time intervals reduces availability of a system comprising the battery. The method in accordance with examples of the present disclosure allows alleviating this issue. For example, a BESS may be required to be constantly available, i.e. 24/7, and it is beneficial to perform full charging or discharging of its battery less frequently, only when it is determined that the accuracy of the SoC of the battery, determined by the method in accordance with examples of the present disclosure, is not sufficiently high to reflect the actual SoC with enough precision, e.g., when the accuracy is below 80% or in some cases below 90%.

As shown in FIG. 3A, at **block 319,** the method 300 may comprise, after the ESS has been charged to the full charge level or fully discharged and the SoC of the ESS has been calibrated such that the SoC calibration has been completed, setting the accuracy value to a maximum accuracy value. Thus, at this point, the SoC of the ESS is considered to be as accurate as possible, and the accuracy value is set or reset to the maximum accuracy value.

The maximum accuracy value may be, e.g., 100% accuracy value or another value or a range of values. For example, the maximum accuracy value may be an accuracy value of above 95% or above 96% or above 97% or above 98% or above 99%. In some examples, the maximum accuracy value may be an accuracy value of 95% or 96% or 97% or 98% or 99%.

As shown in FIG. 3A, at **block 330,** in response to the accuracy value being above the SoC accuracy threshold, the method may generate an indication, referred to as a second indication, that is different from instructing the ESS to be charged to a full charge level or to be fully discharged. This indication is different from the first indication at least because it does not include any automatic instruction to automatically charge or discharge the ESS when the ESS is next in a situation suitable for it to be fully charged or discharged.

In some examples, the second indication comprises an indication permitting a user of the system comprising the ESS to set a specified charge level for the ESS. For example, a prompt or another request may be presented to a driver of the vehicle comprising the ESS, the request requesting a user input indicating a charge level for the ESS. It should be noted that the user input may be received indicating that the ESS is to be charged to any possible level (higher than a current charge level), and this level may theoretically be 100%. However, receiving such user input is different from automatically generating the first indication instructing the ESS to be charged to the full charge level or to be fully discharged.

In some examples, generating the second indication may comprise not generating the first indication. In other words, there may be no separate second indication, and the first indication will not be generated.

It should be appreciated that the method or process 300 may be performed continuously or at certain time intervals during the lifetime of the ESS. In some implementations, when the ESS is in use, the process 300 may be performed continuously and the accuracy value indicative of an accuracy of the SoC of the ESS may be recalculated at each iteration of the process 300. In some examples, the accuracy value may be determined at certain points in time. This may be performed periodically or at different time intervals a duration of which may vary. For example, in some cases, due to certain computational power constraints, the accuracy value may be calculated or determined at every other usage cycle or less frequently.

**FIG. 3B** also illustrates the method 300 and shows some additional details of the method. The processing at blocks 302, 304, 306, 308, and 330 is the same as described in connection with FIG. 3A and is therefore not repeated. The block 310 is shown as a decision block wherein, in response to the accuracy value being below the SoC accuracy threshold, the method may determine whether the ESS is to be charged to the full charge level or whether the ESS is to be fully discharged. Based on the outcome of the decision process at block 310, the process 300 may branch, depending on whether the control device decides that the ESS is to be charged to the full charge level or to be fully discharged.

In response to determining that the ESS to be charged to the full charge level, the process 300 may proceed to a left branch as shown in FIG. 3B.

Thus, at **block 312,** in response to the accuracy value being below the SoC accuracy threshold and based on other factors such as a type of the system including the ESS system, the control device may inform a user about the ESS to be charged to the full charge level the next time the ESS is to be charged. The user may be informed about the charging the ESS to the full charge level so that the user does not interrupt the charging prematurely. Thus, the informing of the user is performed in order to ensure an uninterrupted process of charging the ESS to the full charge level. The user may be informed via, e.g., user interface 30 or 30a, or via any other suitable user interface. The user may be informed at a suitable point in time, and in some cases more than once, e.g., once it is determined that the ESS is to be charged to the full charge level, as the ESS is about to be charged to the full charge level, and/or during the ESS being charged to the full charge level.

At **block 314,** in response to the accuracy value being below the SoC accuracy threshold, the method may comprise, the next time the ESS is to be charged, instructing the ESS to be charged to the full charge level. The processing may be, as it relates to charging the ESS, similar to the processing at block 315 of FIG. 3A, and the relevant description of the processing at block 315 of FIG. 3A applies.

At decision **block 316,** the control device may determine whether the ESS has been charged to the full charge level. This may be determined when the ESS is being charged, e.g., when the system comprising the ESS is connected to the grid to charge the ESS. As another example, the ESS may be charged when excess of electrical energy becomes available, e.g. when the ESS is integrated with a renewable energy source. As another example, in a hybrid system e.g. in a ship or in a data storage center, excess energy may be available due to operation of a diesel generator. The diesel generator may be coupled to the ESS via, e.g., an alternating current (AC) bus.

In response to determining that the ESS has not been charged to the full charge level, the process 300 may return to block 314 as shown in FIG. 3B.

At **block 318,** in response to determining that the ESS has been charged to the full charge level, the process 300 may comprise setting the accuracy value to a maximum accuracy value. The processing may be similar to the processing at block 319 of FIG. 3A, and the description of the processing at block 319 of FIG. 3A applies.

In response to determining that the ESS is to be fully discharged, the process 300 may proceed, from block 310, to a right branch as shown in FIG. 3B.

Thus, at **block 322,** in response to the accuracy value being below the SoC accuracy threshold, the control device may inform a user about the ESS to be fully discharged the next time the ESS is to be discharged. The user may be informed about the discharging of the ESS so that the user does not interrupt the discharging process prematurely. The user may be informed via, e.g., user interface 30 or 30a, or via any other suitable user interface or other device or system.

At **block 324,** in response to the accuracy value being below the SoC accuracy threshold, the method may comprise, the next time the ESS is to be discharged, instructing the ESS to be fully discharged. The processing may be, as it relates to discharging the ESS, similar to the processing at block 315 of FIG. 3A, and the relevant description of the processing at block 315 of FIG. 3A applies.

At decision **block 326,** the control device may determine whether the ESS has been fully discharged. This may be determined when the ESS is being discharged, e.g., when the system comprising the ESS, e.g., an electrical vehicle, is connected to the grid to feed the stored electrical power back to the grid. As another example, the ESS may be discharged when the stored electrical power is required by the consumer such that it is appropriate to discharge to the ESS to 0% SoC without compromising the needs of the consumer.

In response to determining that the ESS has not yet been fully discharged, the process 300 may return to block 324 as shown in FIG. 3B.

In some examples, the processing at blocks 312, 314, 316, 322, 342, 326 of FIG. 3B may be performed as part of processing at block 315 of FIG. 3A.

At **block 328,** in response to determining that the ESS has been fully discharged, the process 300 may comprise setting the accuracy value to a maximum accuracy value. The processing may be similar to the processing at block 319 of FIG. 3A, and the description of the processing at block 319 of FIG. 3A applies.

It should be appreciated that the process 300 may be performed continuously, such that the process 300 may return to block 302 to continue monitoring the SoC of the ESS and determining whether the full charge or discharge of the ESS is to be instructed based on the accuracy value indicative of an accuracy of the SoC.

FIGs. 4, 5, and 6 illustrate how the accuracy value indicative of an accuracy of the SoC of the ESS may be determined. The accuracy value may be determined by the control device and/or by the BMS. In some examples, other suitable control devices or systems may additionally or alternatively be used to determine the accuracy value.

**FIG. 4** shows an example of parameters, referred to as SoC parameters, that may be used to determine the accuracy value. Battery properties such as IR estimation, cell voltage homogeneity and capacity estimation between OCV points may be determined. The values of these parameters, as determined on their own, are typically not certain enough to perform an accurate SoC estimation. However, the method in accordance with examples of the present disclosure is used to estimate the accuracy of the SoC and not an actual SoC. Thus, certain inaccuracy in the estimation may be tolerated, and the values may be estimated in a longer time frame to improve/accumulate the estimation.

As shown in FIG. 4, the parameters may comprise an internal resistance 402 of the ESS that may be compared to an internal resistance reference value 404 in a look-up table, a cell voltage delta and cell voltage 406 of the ESS, a rate of change 408 of the cell voltage delta of the ESS, a charged/discharged capacity 410 in a current cycle of the ESS, a cycle start OCV 412 of the ESS, a cycle end OCV 414 of the ESS, and an operating time since a last SoC calibration 416 of the ESS. These parameters, also referred to herein as SoC parameters, may be determined by the BMS. The BMS may use these parameters to determine the accuracy value indicative of an accuracy of the SoC of the ESS. In some implementations, the BMS may provide these parameters to the control device that may be configured to determine the accuracy value. In some implementations, the accuracy value may be determined by both the BMS and the control device.

The internal resistance 402 of the ESS and the internal resistance reference value 404 in the look-up table may be used to estimate or determine an IR-based SoC accuracy value 420 of the SoC. The look-up table may be stored, e.g., in the battery management system (BMS) of the ESS system comprising the ESS.

The cell voltage delta and cell voltage 406 of the ESS, and the rate of change 408 of the cell voltage delta of the ESS may be used to estimate or determine one or more cell voltage-based SoC accuracy values 422 of the SoC. The charged/discharged capacity 410 in a current cycle of the ESS, the cycle start OCV 412 of the ESS, and the cycle end OCV 414 of the ESS may be used to estimate or determine one or more capacity-based SoC accuracy values 424 of the SoC.

An operating time-based SoC accuracy value 426 contributes, in accordance with a corresponding weight coefficient, to a complete/final SoC accuracy estimation, referred to herein as an accuracy value indicative of the accuracy of the SoC. The operating time-based SoC accuracy value 426 for the SoC may be derived from the operating time since the last SoC calibration 416 of the ESS. The operating time-based SoC accuracy value 426 may be adjusted based on the fact that an increase in an amount of operating time since the last SoC calibration reduces the accuracy of the estimation of the SoC. Thus, for a certain upper threshold for the amount of operating time since the SoC last calibration, the accuracy of the estimation of the SoC may be considered to be 0%.

The IR-based SoC accuracy value 420, the one or more cell voltage-based SoC accuracy values 422, and the one or more capacity-based SoC accuracy values 424, together with the operating time-based SoC accuracy value 426 for the SoC, may be used to determine the accuracy value, as an estimated accuracy value 428. The SoC parameters may be associated with respective weight coefficients and combined, as weighted using the weight coefficients, to generate or determine the estimated accuracy value 428. Thus, each of these parameters, and/or other suitable parameters, may contribute to the total estimate of the accuracy value, indicative of an accuracy of the SoC at a certain point in time, to a degree or percentage corresponding to a weight coefficient assigned to or associated with the respective SoC parameter. The weights may be predetermined or they may be adjusted dynamically.

The predetermined weights may be based on prior test results, as well as on expected usage behavior and cell chemistry/properties of the ESS.

In some examples, the weight coefficients may be determined or adjusted dynamically, e.g., based on a degree of correction of the SoC at one or more prior occurrences of instructing the ESS to be charged to the full charge level or to be fully discharged. For example, a difference, i.e. a magnitude of the difference, between the accuracy value and the SoC accuracy threshold, determined as described at block 306, may be used to adjust the weight coefficients for one or more subsequent events of determining the accuracy value indicative of an accuracy of the SoC.

The dynamic weight adjustment may be based on, for example, additional function that observes the amount of SoC correction performed when SoC recalibration is done. For example, if the SoC accuracy estimation indicated low accuracy but, at a SoC recalibration event, the SoC did not change by a significant margin, a weight of the SoC parameter that contributed most significantly to the final SoC accuracy value may be decreased since it is considered to be less reliable. In some examples, the dynamic weight adjustment may be performed remotely, such that the weight coefficients may be obtained or received from a remote system e.g. from a fleet controller. The fleet controller, configured to monitor and control operation of a fleet of vehicles, is a computing system which may dynamically compute and recompute the weight coefficients, e.g., based on a fleet-wide analysis of data related to operation of ESS systems of two or more vehicles included in the fleet.

A final accuracy value ("SoC accuracy") 430 may then be provided. As described herein, it may be obtained and/or determined at block 304 of FIGs. 3A and 3B. The accuracy value 430, indicative of an accuracy of the SoC, may be expressed as a percentage. The final accuracy value 430 is used further in the method in accordance with examples of the present disclosure, such as at block 306 of FIGs. 3A and 3B.

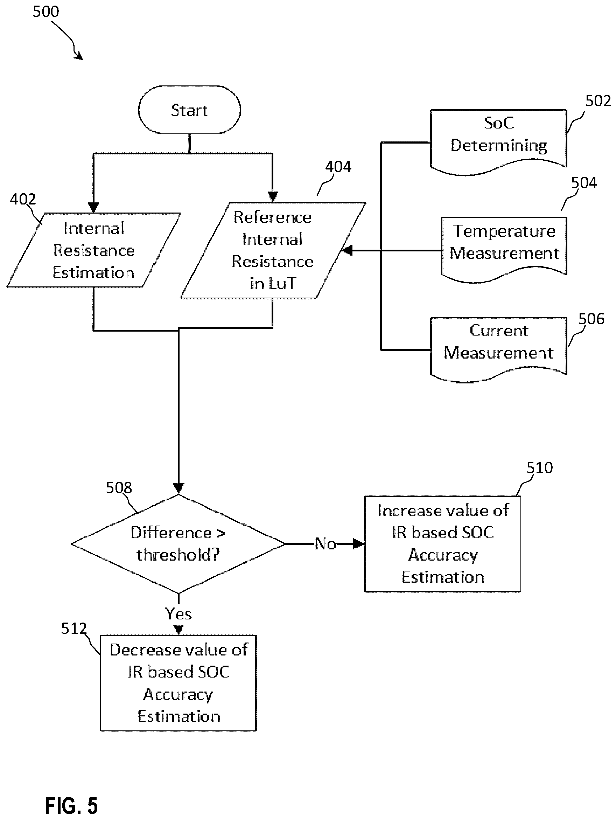

**FIG. 5** illustrates an example of a process or method 500 for determining the IR-based SoC accuracy value 420. The method 500 may be performed by the control device and/or by the BMS. The method 500 illustrates that the IR-based SoC accuracy value 420 may be adjusted based on a result of comparing it with the internal resistance reference value 404 stored in the look-up table (LuT) storing multiple internal resistance reference values. The LuT may be stored in one or more of the BMS, the control device, or in some implementations remotely. In some examples, internal resistance reference values may be stored in a storage other than a LuT, in addition or alternatively.

The internal resistance reference value 404 may be known in advance and it is typically based on various battery SoC, temperature and charge/discharge current conditions. Thus, as shown schematically in FIG. 5, the internal resistance reference value 404 may be based on a SoC 502, temperature measurements 504, and current measurements 506 as acquired from the ESS. The SoC 502 is a value as obtained, e.g. at block 302 of FIGs. 3A and 3B, from the BMS by the control device. The value of the SoC 502 may be estimated continuously by BMS during operation of the ESS system.

The LuT may be in any suitable form. In some examples, the LuT may be a 3D (three-dimensional) table or two or more 2D tables. A resolution of internal resistance reference values in the LuT may be, e.g., 5-10% SoC intervals and about 10 degrees C° intervals, and certain current intervals. The internal resistance reference value 404 may be selected from the LuT based on the SoC 502, the temperature measurements 504, and the current measurements 506.

At **block 508** of FIG. 5, the process 500 may comprise determining a difference between the internal resistance 402 of the ESS and the internal resistance reference value 404 and determining whether the difference is greater than or above an IR difference threshold. The IR difference threshold may be a value that is known in advance, and it may be based on a specific system, cell chemistry, and other factors.

At **block 510,** in response to determining that the difference between the internal resistance 402 of the ESS and the internal resistance reference value 404 is not above the IR difference threshold, the process 500 may comprise increasing the IR-based SoC accuracy value 420. The increase may be linear or non-linear based on a desired response time. The IR-based SoC accuracy value 420 may be increased by a certain percentage value.

At **block 512,** in response to determining that the difference between the internal resistance 402 of the ESS and the internal resistance reference value 404 is above the IR difference threshold, the process 500 may comprise decreasing the IR-based SoC accuracy value 420. The decrease may be linear or non-linear based on a desired response time. The IR-based SoC accuracy value 420 may be decreased by a certain percentage value.

The IR-based SoC accuracy value 420, adjusted using the method 500, can be used in determining the accuracy value indicative of the accuracy of the SoC as shown at blocks 428 and 430 of FIG. 4.

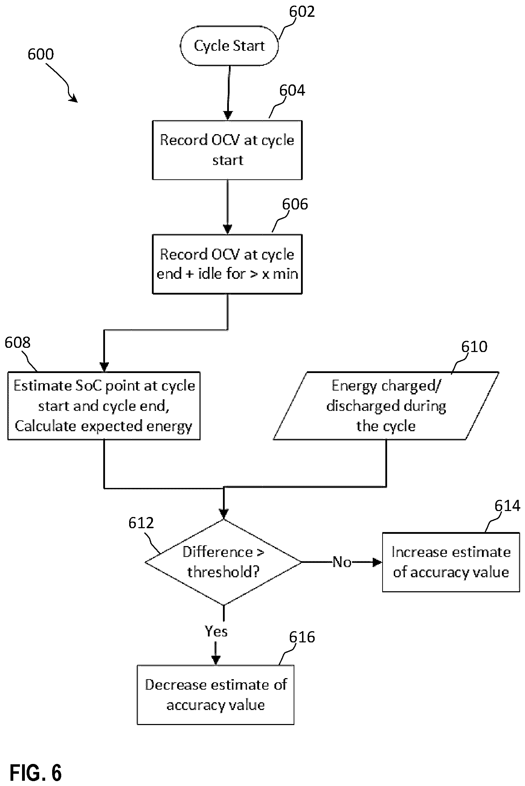

**FIG. 6** illustrates an example of a process or method 600 for determining the capacity-based SoC accuracy value 424 of the SoC. The method 500 may be performed by the control device and/or by the BMS. The method 600 illustrate how expected energy content and SoC approximation from OCV curve can be used to estimate the SoC accuracy.

At **block 602,** the process 600 may start at a start of the cycle. The start of the cycle represents a start of a drivecycle/usage cycle. For example, the start of the cycle may involve closing of contactors of the battery to start a charge or discharge usage. The start of cycle may also be defined as a start of discharge/charge after the ESS has had a zero-current condition for a certain predefined period of time so that the battery is in a relaxed state. The relaxed state may be defined as a time interval of a duration of, e.g., 10-30 minutes of zero current, though other examples of the relaxed state are possible. The start of the cycle may be defined as a combination of both contactor operation and a start of discharge/charge after the battery has been in a relaxed state.

At **block 604,** the method 600 may comprise recording an OCV at the start of the cycle. The recording comprises storing the OCV at the start of the cycle, e.g., in the memory of the BMS and/ the control device.

At **block 606,** the method 600 may comprise recording an OCV at an end of the cycle, after a certain amount of time referred to as an idle time period. A duration of the idle time period may be smaller than a certain amount of time shown as x minutes in FIG. 6.

At **block 608,** the method 600 may comprise estimating a SoC of the ESS at the start of the cycle based on a SoC-OCV curve, estimating a SoC of the ESS at the end of the cycle based on a SoC-OCV curve, and calculating expected energy content between the SoC of the ESS at the start of the cycle and the SoC at the end of the cycle. The expected energy content may be based on a total battery capacity and an SoC window that was actually consumed. As one non-limiting example, if the total battery capacity is 100kwh, and the SoC at the start of the cycle was estimated to be 70% SoC and the SoC at the end of the cycle was estimated to be 30% SoC, the expected energy content would be 100kwh*(70%-30%) i.e. 40kwh.

At **block 610,** the method 600 may comprise determining an amount of energy charged/discharged during the cycle.

At **block 612,** the method 600 may comprise determining a difference between the expected energy content and the energy charged/discharged during the cycle, and determining whether the difference is greater than or above an energy threshold.

At **block 614,** in response to determining that the difference between the expected energy content and the energy charged/discharged during the cycle is not above the energy threshold, the process 600 may comprise increasing the capacity-based SoC accuracy value 424. The capacity-based SoC accuracy value 424 may be increased by a certain percentage value.

At **block 616,** in response to determining that the difference between the expected energy content and the energy charged/discharged during the cycle is above the energy threshold, the process 600 may comprise decreasing the capacity-based SoC accuracy value 424. The capacity-based SoC accuracy value 424 may be decreased by a certain percentage value.

A magnitude of the increase or decrease of the capacity-based SoC accuracy value 424, as in blocks 614 and 616, may depend on a relationship between the measured energy and the expected energy. For example, as one non-limiting example, if a total capacity is 100kwh, the expected energy is 50kwh and the actual energy is 40kwh, the capacity-based SoC accuracy value 424 may be decreased by 10% or a corresponding scaling factor. In some examples, an increase or decrease of the capacity-based SoC accuracy value 424 may be a predetermined value for every time the process 600 is executed, such as once per a drive cycle. In some examples, the increase may be a logarithmic function where the increase is based on a difference from 100%.

The capacity-based SoC accuracy value 424, adjusted using the method 600, can be used in determining the accuracy value indicative of the accuracy of the SoC as shown at blocks 428 and 430 of FIG. 4.

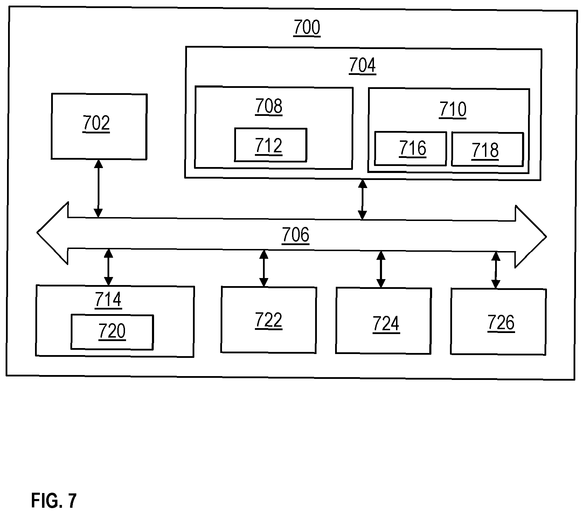

**FIG. 7** is a schematic diagram of a computer system **700** for implementing examples disclosed herein. In some examples, the control devices 40 and 40a may be implemented as the computer system 700. The computer system 700 is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., ElDE or SATA) for storage, flash memory, or the like. The storage device 714 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface 722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display and/or to a video display unit. The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples. The below Examples may be combined with any of the examples above, or with the subject matter of the attached claims, in any suitable manner.

### Examples

Example 1. A control device (40, 40a) for an energy storage system (ESS) system (20, 20a) comprising an ESS, the control device (40, 40a) comprising processing circuitry (42, 42a) and a memory device (44, 44a) storing computer-executable instructions, the processing circuitry being (42, 42a) configured to execute the computer-executable instructions to:
obtain an accuracy value indicative of an accuracy of a state of charge (SoC) of the ESS; and
in response to the accuracy value being below a SoC accuracy threshold, a next time the ESS is to be charged or discharged, instruct the ESS to be charged to a full charge level or to be fully discharged, and initiate a SoC calibration of the ESS.

Example 2. The control device (40, 40a) of Example 1, wherein the processing circuitry is configured to, in response to the accuracy value being below the SoC accuracy threshold,
inform a user about the ESS to be charged to the full charge level the next time the ESS is to be charged, or
inform the user about the ESS to be fully discharged the next time the ESS is to be discharged.

Example 3. The control device (40, 40a) of Example 1 or Example 2, wherein the processing circuitry is configured to, after the ESS has been charged to the full charge level or fully discharged and the SoC of the ESS has been calibrated, set the accuracy value to a maximum accuracy value.

Example 4. The control device (40, 40a) of any one of Examples 1 to 3, wherein the processing circuitry is configured to, in response to the accuracy value being above the SoC accuracy threshold, generate an indication that is different from instructing the ESS to be charged to a full charge level or to be fully discharged.

Example 5. The control device (40, 40a) of Example 4, wherein the indication comprises an indication permitting a user to set a specified charge level for the ESS.

Example 6. The control device (40, 40a) of any one of Examples 1 to 5, wherein the accuracy value indicative of the accuracy of the SoC is determined based on one or more SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start Open Circuit Voltage (OCV), of the ESS, a cycle end OCV of the ESS, and an operating time since a last SoC calibration of the ESS.

Example 7. The control device (40, 40a) of Example 6, wherein the one or more SoC parameters are associated with respective weight coefficients for determining the accuracy value indicative of the accuracy of the SoC.

Example 8. A system (10, 100) comprising the control device (40, 40a) of any one of Examples 1 to 7.

Example 9. The system (10, 100) of Example 8, wherein the system (10, 100) comprises an electric vehicle or a stationary system.

Example 10. A method (300) for controlling an energy storage system, ESS, system (20, 20a) comprising an ESS (22, 22a), the method comprising:
obtaining (304) an accuracy value indicative of an accuracy of a state of charge, SoC, of the ESS (22, 22a); and
in response to the accuracy value being below a SoC accuracy threshold,
a next time the ESS (22, 22a) is to be charged or discharged, instructing (315) the ESS to be charged to a full charge level or to be fully discharged, and initiating a SoC calibration of the ESS.

Example 11. The method of Example 10, further comprising, in response to the accuracy value being below the SoC accuracy threshold, determining (310) whether the ESS is to be charged to the full charge level or whether the ESS is to be fully discharged.

Example 12. The method of Example 10 or Example 11, further comprising, after the ESS (22, 22a) has been charged to the full charge level or fully discharged and the SoC of the ESS has been calibrated, setting (319) the accuracy value to a maximum accuracy value.

Example 13. The method of any one of Examples 10 to 12, further comprising, in response to the accuracy value being above the SoC accuracy threshold, generating (330) an indication that is different from instructing the ESS to be charged to a full charge level or to be fully discharged.

Example 14. The method of any one of Examples 10 to 13, wherein obtaining the accuracy value indicative of the accuracy of the SoC comprises determining the accuracy value indicative of the accuracy of the SoC.

Example 15. The method of any one of Examples 10 to 13, wherein obtaining the accuracy value indicative of the accuracy of the SoC comprises receiving the accuracy value indicative of the accuracy of the SoC.

Example 16. The method of any one of Examples 10 to 15, wherein the accuracy value indicative of the accuracy of the SoC is determined based on one or more SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start Open Circuit Voltage (OCV) of the ESS, a cycle end OCV of the ESS, and an operating time since a last SoC calibration of the ESS.

Example 17. A computer program product comprising computer-executable instructions, which, when executed by processing circuitry, cause the processing circuitry to perform the method of any one of Examples 10 to 16.

Example 18. A tangible non-transitory computer-readable storage medium, having stored thereon a computer program product comprising computer-executable instructions which, when executed by processing circuitry, cause the processing circuitry to perform the method of any one of Examples 10 to 16.

Example 19. A battery management system (26, 26a) for an energy storage system (ESS) system (20, 20a) comprising an ESS (22, 22a), the battery management system (26, 26a) being configured to:
obtain a value of a state of charge, SoC, of the ESS (22, 22a);
determine an accuracy value indicative of an accuracy of the SoC of the ESS (22, 22a); and
provide the accuracy value to a control device (40, 40a) configured to control operation of the ESS system (20, 20a).

Example 20. The battery management system (26, 26a) of Example 19, wherein the accuracy value indicative of the accuracy of the SoC is determined based on one or more SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start OCV of the ESS, a cycle end OCV of the ESS, and an operating time since a last SoC calibration of the ESS.

Example 21. The battery management system (26, 26a) of Example 20, wherein the one or more SoC parameters are associated with respective weight coefficients for determining the accuracy value indicative of the accuracy of the SoC.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A control device (40, 40a) for an energy storage system, ESS, system (20, 20a) comprising an ESS (22, 22a), the control device comprising processing circuitry (42, 42a) and a memory device (44, 42a) storing computer-executable instructions, the processing circuitry being configured to execute the computer-executable instructions to:
obtain an accuracy value indicative of an accuracy of a state of charge, SoC, of the ESS (22, 22a); and
in response to the accuracy value being below a SoC accuracy threshold,
a next time the ESS (22, 22a) is to be charged or discharged, instruct the ESS to be charged to a full charge level or to be fully discharged, and initiate a SoC calibration of the ESS.

2. The control device of claim 1, wherein the processing circuitry is configured to, in response to the accuracy value being below the SoC accuracy threshold,
inform a user about the ESS to be charged to the full charge level the next time the ESS is to be charged, or
inform the user about the ESS to be fully discharged the next time the ESS is to be discharged.

3. The control device of claim 1 or claim 2, wherein the processing circuitry is configured to, after the ESS has been charged to the full charge level or fully discharged and the SoC of the ESS has been calibrated, set the accuracy value to a maximum accuracy value.

4. The control device of any one of claims 1 to 3, wherein the processing circuitry is configured to, in response to the accuracy value being above the SoC accuracy threshold, generate an indication that is different from instructing the ESS to be charged to a full charge level or to be fully discharged.

5. The control device of claim 4, wherein the indication comprises an indication permitting a user to set a specified charge level for the ESS.

6. The control device of any one of claims 1 to 5, wherein the accuracy value indicative of the accuracy of the SoC is determined based on one or more SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start Open Circuit Voltage, OCV, of the ESS, a cycle end OCV of the ESS, and an operating time since a last SoC calibration of the ESS.

7. A system (10, 100) comprising the control device (40, 40a) of any one of claims 1 to 6.

8. A method (300) for controlling an energy storage system, ESS, system (20, 20a) comprising an ESS (22, 22a), the method comprising:
obtaining (304) an accuracy value indicative of an accuracy of a state of charge, SoC, of the ESS (22, 22a); and
in response to the accuracy value being below a SoC accuracy threshold,
a next time the ESS (22, 22a) is to be charged or discharged, instructing (315) the ESS to be charged to a full charge level or to be fully discharged, and initiating a SoC calibration of the ESS.

9. The method of claim 8, further comprising, in response to the accuracy value being below the SoC accuracy threshold, determining (310) whether the ESS is to be charged to the full charge level or whether the ESS is to be fully discharged.

10. The method of claim 8 or claim 9, further comprising, after the ESS (22, 22a) has been charged to the full charge level or fully discharged and the SoC of the ESS has been calibrated, setting (319) the accuracy value to a maximum accuracy value.

11. The method of any one of claims 8 to 10, further comprising, in response to the accuracy value being above the SoC accuracy threshold, generating (330) an indication that is different from instructing the ESS to be charged to a full charge level or to be fully discharged.

12. The method of any one of claims 8 to 11, wherein the accuracy value indicative of the accuracy of the SoC is determined based on one or more SoC parameters comprising an internal resistance of the ESS, a cell voltage delta of the ESS, a cell voltage of the ESS, a rate of change of the cell voltage delta of the ESS, a charged/discharged capacity in a current cycle of the ESS, a cycle start Open Circuit Voltage, OCV, of the ESS, a cycle end OCV of the ESS, and an operating time since a last SoC calibration of the ESS.

13. The method of claim 12, wherein the one or more SoC parameters are associated with respective weight coefficients for determining the accuracy value indicative of the accuracy of the SoC.

14. A tangible non-transitory computer-readable storage medium, having stored thereon a computer program product comprising computer-executable instructions which, when executed by processing circuitry, cause the processing circuitry to perform the method of any one of claims 8 to 13.

15. A battery management system, BMS, (26, 26a) for an energy storage system, ESS, system (20, 20a) comprising an ESS (22, 22a), the battery management system (26, 26a) being configured to:
obtain a value of a state of charge, SoC, of the ESS (22, 22a);
determine an accuracy value indicative of an accuracy of the SoC of the ESS (22, 22a); and
provide the accuracy value to a control device (40, 40a) configured to control operation of the ESS system (20, 20a).
